# FASCICULE DE BREVET EUROPEEN

(11) **EP 2 652 558 B1**
(45) Date de publication et mention de la délivrance du brevet: **22.04.2020**
(21) Numéro de dépôt: 11805456.8
(22) Date de dépôt: 14.12.2011
(51) Int. Cl.: G04B 5/20, G04B 47/06, G01L 7/10

(54) **CAPSULE POUR INSTRUMENT SCIENTIFIQUE**
KAPSEL FÜR WISSENSCHAFTLICHES INSTRUMENT
CAPSULE FOR SCIENTIFIC INSTRUMENT

(30) Priorité: 17.12.2010 EP 10195828
(43) Date de publication de la demande: 23.10.2013
(73) Titulaire: The Swatch Group Research and Development Ltd., 2074 Marin (CH)
(72) Inventeur: WINKLER, Yves, CH-3185 Schmitten (CH); FERRI, Yvan, CH-1004 Lausanne (CH); REBEAUD, Nicolas, CH-1052 Le Mont-sur-Lausanne (CH)
(74) Mandataire: Giraud, Eric
(86) Numéro de dépôt international: PCT/EP2011/072770
(87) Numéro de publication internationale: WO 2012/080344

(56) Documents cités:
- EP-A1- 1 101 937
- EP-A1- 2 113 759
- EP-A1- 2 180 385
- FR-A1- 2 209 093

## Description

La présente invention concerne une capsule comprenant deux coupelles rendues solidaires l'une de l'autre de sorte qu'elles sont jointes par une surface fermée commune et définissant ensemble, de part, et d'autre de ladite surface, un espace fermé délimité par lesdites coupelles. Au moins une des deux coupelles est une membrane flexible déformable sous l'effet d'une grandeur physique.

### ARRIERE PLAN TECHNOLOGIQUE

Il est connu dans l'art antérieur un instrument scientifique ou objet portable tel une montre de plongée ou un altimètre, qui comprend un boîtier qui porte un capteur de pression. Ce capteur comprend une membrane et un dispositif de transmission. La membrane est capable de se déformer mécaniquement sous l'effet de la pression extérieure agissant alors sur le dispositif de transmission. Ce dispositif transfère ainsi ledit mouvement de déformation représentatif de la pression afin d'être, par exemple, amplifié dans le but d'afficher la valeur de la pression détectée par le capteur.

Il est également connu d'utiliser ces capsules comme source d'énergie pour des pièces d'horlogerie. Ces capsules contiennent un liquide comme du chlorure d'éthyle. Ce liquide réagit au changement de température pour se vaporiser lorsque la température s'élève et ainsi augmenter la pression dans la capsule. Cette dernière coopère avec un ressort de remontage retenu par une coupelle reliée à une chaînette par une poulie. Cette dernière arme le ressort de barillet par une suite de va et vient par l'intermédiaire d'un système d'encliquetage d'un rochet et d'une roue intermédiaire.

Lorsque la température monte, la capsule arme le ressort de remontage de sorte que la chaîne se tende et décliquète la poulie. Lorsque la température baisse, la capsule se contracte, permettant au ressort de remontage de tirer sur la chaîne et de remonter le barillet.

Généralement, ces capsules sont réalisées par assemblage de deux coupelles ou membranes au niveau de leur périphérie ou bords de sorte qu'un espace soit présent entre ces deux membranes. Les membranes constituant la capsule sont réalisées en matériau cristallin tel que, par exemple, un alliage composé de Cuivre et de Béryllium (Cu-Be).

Or, chaque matériau se caractérise par son module d'Young E également appelé module d'élasticité (exprimé généralement en GPa), caractérisant sa résistance à la déformation. De plus, chaque matériau est aussi caractérisé par sa limite élastique σₑ (exprimée généralement en GPa) qui représente la contrainte au-delà de laquelle le matériau se déforme plastiquement. Ainsi, il est possible, pour une épaisseur donnée, de comparer les matériaux en établissant pour chacun le rapport de leur limite élastique sur leur module d'Young σₑ/E, ledit rapport étant représentatif de la déformation élastique de chaque matériau. Ainsi, plus ce rapport est élevé, plus la déformation élastique du matériau est élevée. Cependant, les matériaux cristallins tels qu'utilisés dans l'art antérieur, par exemple, l'alliage Cu-Be, dont le module d'Young E est égal à 130 GPa et ayant une limite d'élasticité σₑ valant typiquement 1 GPa, donnent un rapport σₑ/E faible c'est-à-dire de l'ordre de 0,007. Ces capsules en alliage cristallin possèdent, par conséquent, une déformation élastique limitée. Dans le cadre d'une application de type altimètre ou source d'énergie pour remonter un barillet, cela implique respectivement, une plage de mesure limitée et une force de remontage faible.

De plus, comme cette limite élastique est basse, la capsule lorsqu'elle se déforme, approche sa région de déformation plastique sous faibles contraintes avec le risque qu'elle ne puisse reprendre sa forme initiale. Pour éviter de telles déformations, une limitation de la déformation
de la capsule est réalisée, c'est-à-dire que l'amplitude du mouvement de la capsule est volontairement bornée. On comprend alors, que pour l'application altimètre, il soit nécessaire d'amplifier le mouvement de transfert. Cela entraîne alors un bruit qui est néfaste à l'altimètre et, incidemment, à l'affichage de la valeur mesurée.

Par ailleurs, l'espace entre les membranes est soumis au vide ou rempli de liquide. La capsule doit alors être étanchéifiée. Pour cela, il est généralement utilisé une soudure afin de solidariser les deux membranes et d'étanchéifier ladite capsule.

Or, cette méthode d'assemblage et d'étanchéification de la capsule limite le type de matériaux pouvant être utilisé. Effectivement, l'homme du métier peut envisager d'utiliser des matériaux avec des meilleures propriétés mécaniques comme les verres métalliques ou métaux amorphes. Néanmoins, avec le procédé de fabrication utilisé généralement et décrit ci-dessus, il va écarter leur utilisation. Il va faire ce choix car il va avoir le préjugé qu'il ne pourra pas utiliser sa technique habituelle pour réaliser une capsule sans que cette dernière ne voie ses caractéristiques se modifier. En effet, il va avoir le préjugé que l'assemblage et l'étanchéification par soudure va modifier les propriétés du métal amorphe composant la capsule car l'opération de soudure nécessite une élévation de la température. Cette élévation de la température peut alors entraîner une cristallisation du métal amorphe si la température atteint une température entre la température de cristallisation et la température de transition vitreuse dudit métal amorphe
Cette cristallisation partielle de la capsule entraîne une modification de ses caractéristiques et donc un comportement différent de la capsule. L'homme du métier n'est donc pas attiré par l'utilisation des métaux amorphes pour fabriquer une capsule.

On connait aussi dans l'état de la technique, le document EP 2113759 qui décrit un capteur de pression réalisant la mesure d'une pression à partir d'une unique membrane. On connait aussi le document FR2209093A1 qui décrit une capsule manométrique et principalement son utilisation ainsi que son agencement dans un boîtier de montre.

### RESUME DE L'INVENTION

Alternativement, l'invention propose une capsule permettant une amplitude
de déformation équivalente pour des dimensions qui sont plus faibles.

A cet effet, l'invention concerne un instrument scientifique comprenant un capteur de pression, ledit capteur comprenant une capsule coopérant avec un dispositif de transmission permettant à partir de la déformation de la capsule de fournir une valeur représentative de la pression, caractérisé en ce que la capsule comprend deux coupelles rendues solidaires l'une de l'autre de sorte qu'elles sont jointes par une surface fermée commune et définissant ensemble, de part et d'autre de ladite surface, un espace fermé délimité par lesdites coupelles, les deux coupelles étant des membranes flexibles déformables sous l'effet d'une grandeur physique, au moins une desdites membrane étant réalisée en alliage métallique au moins partiellement amorphe afin d'optimiser les dimensions de ladite capsule et en ce que ledit instrument comprend un support sur lequel ladite capsule est fixée au niveau de la surface fermée commune.

Dans un premier mode de réalisation avantageux, ledit alliage métallique de la membrane comporte un rapport de la limite élastique sur son module d'Young supérieur à 0,01.

Dans un second mode de réalisation avantageux, ledit alliage métallique de la membrane comporte un module d'Young supérieur à 50GPa.

Dans un troisième mode de réalisation avantageux, les deux coupelles sont des membranes flexibles déformables.

Dans un quatrième mode de réalisation avantageux, les deux membranes flexibles déformables sont réalisées dans ledit alliage métallique au moins partiellement amorphe.

Dans un autre mode de réalisation avantageux, ledit alliage métallique est totalement amorphe.

Dans un autre mode de réalisation avantageux, ledit alliage métallique comprend au moins un élément métallique qui est du type précieux et choisi parmi les éléments de la liste comprenant l'or, le platine, le palladium, le rhénium, le ruthénium, le rhodium, l'argent, l'iridium ou l'osmium.

Dans un autre mode de réalisation avantageux, ledit alliage métallique est exempt d'élément allergène.

Dans un autre mode de réalisation avantageux, chaque membrane est sensiblement discoïdale.

Dans un autre mode de réalisation avantageux, chaque membrane possède une section non rectiligne afin d'augmenter sa surface de déformation.

Dans un autre mode de réalisation avantageux, la section de la membrane comporte au moins une partie sinusoïdale.

Un premier avantage de la capsule selon la présente invention est qu'elle possède des caractéristiques élastiques plus intéressantes. En effet, dans le cas d'un matériau amorphe, le rapport σₑ/E est augmenté par élévation de la limite élastique σₑ. Le matériau voit donc la contrainte, au-delà de laquelle il ne reprend pas sa forme initiale, augmenter. Cette amélioration du rapport σₑ/E permet alors une déformation plus importante. Cela permet d'optimiser les dimensions de la capsule selon que l'on veuille augmenter la plage de mesure ou de déformation de la capsule ou alors réduire la taille de ladite capsule pour une plage de mesure ou de déformation équivalente.

Un autre avantage de ces matériaux amorphes est qu'ils ouvrent de nouvelles perspectives de mise en forme permettant l'élaboration de pièces aux formes compliquées avec une plus grande précision. En effet, les métaux amorphes ont la caractéristique particulière de se ramollir tout en restant amorphe dans un intervalle de température [Tx - Tg] donné propre à chaque alliage (avec Tx : température de cristallisation et Tg : température de transition vitreuse). Il est ainsi possible de les mettre en forme sous une contrainte relativement faible et à une température peu élevée. Cela permet alors de reproduire très précisément des géométries fines car la viscosité de l'alliage diminue fortement et ce dernier épouse ainsi tous les détails du moule.

Cette précision peut également être obtenue par injection de métal liquide dans un moule. Ce métal est alors refroidi très rapidement afin de ne pas cristalliser et d'être ainsi amorphe. Ce procédé est avantageux car, comme le métal amorphe ne possède pas de structure cristalline lorsque celui-ci se solidifie, le métal amorphe ne subit que très peu les effets du retrait de matière dû à la solidification. Ainsi dans le cas d'un matériau cristallin, ce retrait de solidification peut atteindre 5 à 6% ce qui signifie que la capsule voit sa taille diminuer de 5 à 6 % lors de la solidification. Alors que dans le cas du métal amorphe, ce retrait est d'environ 0.5%.

Dans un autre mode de réalisation avantageux, l'instrument scientifique comprend en outre un moyen de conversion de ladite valeur représentative de la pression en une valeur de profondeur permettant à ladite montre d'effectuer une fonction profondimètre.

Dans un autre mode de réalisation avantageux, l'instrument scientifique comprend en outre un moyen de conversion de ladite valeur représentative de la pression en une valeur d'altitude permettant à ladite montre d'effectuer une fonction altimètre.

Dans un autre mode de réalisation avantageux, l'instrument scientifique, l'espace entre les deux coupelles est mis sous un vide compris entre 10⁻³ et 10⁻⁷ mbar.

Dans un autre mode de réalisation avantageux, ledit instrument est une pièce d'horlogerie portable.

### BREVE DESCRIPTION DES FIGURES

Les buts, avantages et caractéristiques de la capsule selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une vue en coupe de la capsule selon la présente invention ;
- la figure 2 représente de manière schématique une vue en coupe d'une variante de la capsule selon la présente invention ;
- la figure 3 représente de manière schématique une perspective d'une variante de la capsule selon la présente invention ;
- la figure 4 représente les courbes de déformation pour un matériau cristallin et pour un matériau amorphe; et
- la figure 5 représente de manière schématique une vue en coupe d'une variante monobloc de la capsule. Cette variante n'est cependant pas un mode de réalisation de l'invention selon les revendications annexées;
- la figure 6 représente une vue en coupe longitudinale d'une montre comprenant un capteur de pression utilisant la capsule selon la présente invention ; et
- les figures 7 et 8 représentent une vue en coupe longitudinale d'une capsule et d'une pièce d'horlogerie utilisant la capsule pour le montage d'un barillet. Cependant, ces exemples ne représentent pas un mode de réalisation de l'invention selon les revendications annexées;

### DESCRIPTION DETAILLEE

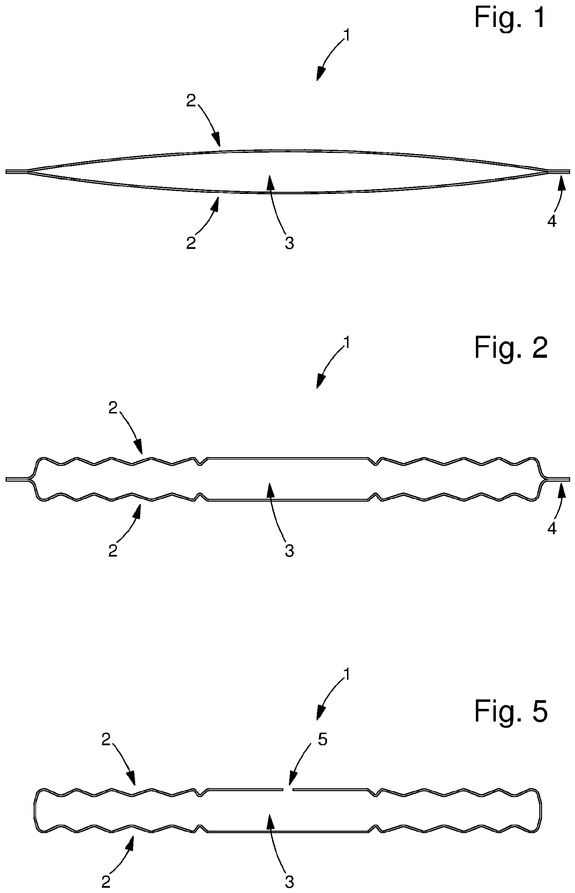

Les figures 1 à 2 représentent une vue en coupe d'une capsule 1 selon la présente invention. Cette capsule 1 se compose de deux coupelles 2. Ces deux coupelles 2 sont jointes par une surface fermée commune 4 et définissent ensemble, de part et d'autre de ladite surface commune, un espace fermé 3 délimité par lesdites coupelles 2.

Avantageusement la solidarisation des deux coupelles 2 est effectuée de sorte que l'espace 3 entre les deux coupelles 2 soit totalement isolé de l'espace extérieur.

Selon les applications, au moins l'une des deux coupelles 2 est agencée pour être une membrane déformable. Cette membrane 2 est agencée de sorte que sous l'effet d'une grandeur physique comme la température ou la pression, elle puisse se déformer, la déformation étant liée à cette grandeur physique. De préférence, les deux coupelles 2 sont agencées sous forme de membranes 2 déformables.

Avantageusement selon l'invention, au moins une des membranes 2 de la capsule 1 comporte un matériau amorphe c'est à dire partiellement amorphe ou totalement amorphe. Ce matériau partiellement ou totalement amorphe est obtenu par fusion et mélange des éléments constituant ledit matériau puis par refroidissement rapide afin d'empêcher au moins partiellement ou totalement la cristallisation dudit matériau. En particulier, on utilise des verres métalliques c'est-à-dire des alliages métalliques amorphes. Préférentiellement, la capsule 1 comprend deux membranes 2 réalisées en alliage ou métal amorphe. C'est cette variante qui sera utilisée dans la suite de la description. On appellera alors « capsule en matériaux amorphes », une capsule 1 dont au moins une des membranes 2 de la capsule 1 comporte un matériau amorphe ou partiellement amorphe.

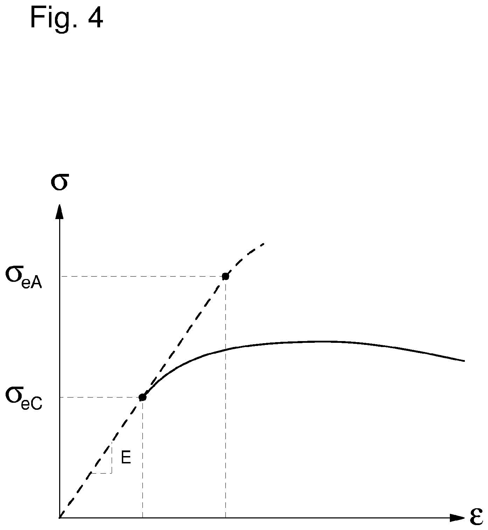

En effet, l'avantage de ces alliages métalliques amorphes, vient du fait que, lors de leur fabrication, les atomes composant ce matériau amorphe ne s'arrangent pas selon une structure particulière comme c'est le cas pour les matériaux cristallins. Ainsi, même si les modules d'Young E d'un matériau cristallin et d'un matériau amorphe sont proches, leurs limites élastiques, σₑ, sont différentes. Le matériau amorphe se différencie par une limite élastique σₑₐ plus élevée que celle du matériau cristallin d'un rapport sensiblement égal à deux, comme représenté sur la figure 4. Cette figure représentant la courbe de la contrainte σ en fonction de la déformation ε pour un matériau amorphe (en pointillé) et pour un matériau cristallin. Cela permet aux matériaux amorphes de pouvoir subir une plus forte déformation avant d'arriver à la limite élastique σₑ.

En premier lieu, cette capsule 1 avec au moins une coupelle 2 en matériau amorphe permet d'améliorer la fiabilité du mécanisme dans lequel elle se trouve par rapport à une capsule 1 en matériau cristallin. En effet, la limite élastique σₑₐ est plus élevée ce qui rend la région plastique plus éloignée et donc diminue le risque de déformer plastiquement la capsule 1 sous l'effet de la contrainte appliquée.

En second lieu, on constate qu'une capsule 1 avec au moins une coupelle 2 en matériau amorphe permet, pour une même contrainte appliquée centralement, c'est-à-dire à distance de la surface de jonction des coupelles 2, l'optimisation de son dimensionnement afin de couvrir une course équivalente. Il est admis que les dimensions de la capsule 1 modifient sa déformation. Dès lors, on constate que si le diamètre augmente alors la course théorique de la capsule 1 augmente. En outre, si l'épaisseur augmente, la course théorique de la capsule 1 diminue. Avantageusement, avec une limite élastique qui augmente, la contrainte pouvant être appliquée à la capsule 1, sans déformation plastique, augmente. Il devient alors possible de garder la même amplitude de mouvement en réduisant son diamètre et son épaisseur. La capsule 1 devient, en conséquence, plus compacte.

Concernant le matériau en lui-même, on peut tout d'abord considérer que plus le rapport σₑ/E est élevé, plus la capsule 1 est efficace. Avantageusement, les matériaux dont le rapport σₑ/E est supérieur à 0,01 sont les matériaux les plus appropriés pour réaliser une capsule 1. On peut également préciser que hormis le rapport σₑ/E, la valeur de E peut être également choisie afin d'être supérieure à une certaine limite, ceci afin que la capsule puisse être contenue dans un volume acceptable. Préférentiellement, cette limite est fixée à 50 GPa.

Ensuite, d'autres caractéristiques peuvent être prises en compte. Ainsi on peut considérer que les caractéristiques de résistance à la corrosion et d'amagnétisme sont intéressantes surtout pour une montre de plongée. Par « amagnétique », on entend un matériau magnétique doux, de préférence de perméabilité relative de l'ordre de 50 à 200, et surtout une valeur de champ de saturation élevée, supérieure à 500 A/m. On pourra alors citer comme exemples de matériaux amorphes pouvant être utilisés : le Zr41Ti14Cu12Ni10Be23 dont le module d'Young E vaut 105 GPa et la limite élastique vaut σₑ= 1,9 GPa, comporte un rapport σₑ/E = 0,018 et le Pt57.5Cu14.7Ni5.3P22.3 dont le module d'Young E vaut 98 GPa et la limite élastique vaut σₑ= 1,4 GPa comporte un rapport σₑ/E = 0,014.

Bien sûr, il existe d'autres caractéristiques qui peuvent être intéressantes telles que l'aspect allergène de l'alliage. En effet, on peut remarquer que les matériaux qu'ils soient cristallins ou amorphes utilisent souvent des alliages comprenant des éléments allergènes. Par exemple, de tels types d'alliages comportent du Cobalt ou du Nickel. Ainsi, des variantes de la capsule selon la présente invention peuvent être réalisées avec des alliages ne contenant pas ces éléments allergènes. On peut aussi prévoir que des éléments allergènes soient présents mais que ceux-ci ne provoquent pas de réaction allergène. Pour cela, on peut prévoir que la capsule 1 qui contient ces éléments allergènes ne les relâche pas lorsque la corrosion attaque la capsule 1.

Selon une autre variante de l'invention, il peut être prévu que la capsule 1 soit réalisée en matériau noble. Effectivement, à l'état cristallin, les alliages de matériaux nobles tels que l'or ou le platine sont trop mous pour permettre la réalisation d'une capsule 1 flexible et robuste. Mais dès lors qu'ils se présentent sous la forme de verre métallique, c'est-à-dire à l'état amorphe, ces alliages de métaux précieux sont alors dotés de caractéristiques telles que leur utilisation pour la fabrication d'une capsule 1 pour un capteur de pression devient possible tout en proposant un aspect précieux et esthétique. De façon préférentielle, le platine 850 (Pt 850) et l'or 750 (Au 750) sont les alliages de métaux précieux qui sont utilisés pour la réalisation de ladite capsule. Bien sûr, d'autres métaux précieux peuvent être utilisés tels que du palladium, rhénium, ruthénium, rhodium, argent, iridium et osmium. L'utilisation de tels alliages de métaux précieux amorphes pour une capsule est contraire aux préjugés concernant les faibles caractéristiques mécaniques des métaux précieux.

Un gros avantage des métaux ou alliages métalliques amorphes vient de leur facilité à être mis en forme. En effet, les métaux amorphes ont la caractéristique particulière de se ramollir tout en restant amorphes dans un intervalle de température (Tx - Tg) donné propre à chaque alliage (par exemple pour un alliage Zr_{41.24}Ti_{13.75}Cu_{12.5}Ni₁₀Be_{22.5}, Tg=350°C et Tx=460°C). Il est ainsi possible de les mettre en forme sous une contrainte relativement faible (1MPa) et à des températures peu élevées, c'est-à-dire inférieures à 600 °C.

Ce procédé de mise en forme consiste en un formage à chaud d'une préforme amorphe. Cette préforme est obtenue par fusion des éléments métalliques constituant l'alliage amorphe dans un four. Cette fusion est faite sous contrôle avec pour but d'obtenir une contamination de l'alliage en oxygène aussi faible que possible.

Par exemple, pour réaliser une des membranes 2 de la capsule 1, les éléments fondus sont coulés sous forme de semi produit, comme par exemple un disque de dimensions proches de la membrane 2, puis refroidis rapidement afin de conserver l'état amorphe. Une fois la préforme obtenue, le formage à chaud est utilisé dans le but d'obtenir une pièce définitive. Ce formage à chaud est réalisé par pressage dans une gamme de température comprise entre Tg et Tx durant un temps déterminé pour conserver une structure totalement ou partiellement amorphe. Pour ce procédé de formage à chaud, le pressage est suivi d'un refroidissement. Le pressage et le refroidissement doivent être suffisamment rapides pour éviter la cristallisation du matériau constitutif de la membrane 2. En effet, pour un matériau donné et à une température donnée entre sa température de transition vitreuse Tg et sa température de cristallisation Tx, il existe une durée limite au-delà de laquelle, ledit matériau cristallise. Cette durée diminue lorsque la température approche sa température de cristallisation Tx et cette durée augmente lorsque la température approche sa température de transition vitreuse Tg. Ainsi, le matériau amorphe va cristalliser si le temps passé à une température comprise entre Tg et Tx excède une certaine valeur spécifique pour chaque couple température/alliage. Typiquement pour un alliage du type Zr41.2Ti13.8Cu12.5Ni10Be22.5 et pour une température de 440°C, le temps de pressage ne devra pas dépasser une valeur d'environ 120 secondes. Ainsi, l'état au moins partiellement amorphe initial de la préforme sera conservé.

Ceci est fait dans le but de conserver les propriétés élastiques caractéristiques des métaux amorphes. Les différentes étapes de mise en forme définitive de la capsule 1 sont alors :
a) Chauffage des matrices ayant la forme négative de la membrane 2 jusqu'à une température choisie,
b) Introduction de disque en métal amorphe entre les matrices chaudes,
c) Application d'une force de fermeture sur les matrices afin de répliquer la géométrie de ces dernières sur le disque en métal amorphe,
d) Attente durant un temps maximal choisi,
e) Ouverture des matrices,
f) Refroidissement rapide de la membrane en dessous de Tg, et
g) Sortie de la membrane 2 des matrices.

Ce mode de mise en forme permet de reproduire très précisément des géométries fines car la viscosité de l'alliage diminue fortement, ce dernier épousant ainsi tous les détails du moule. Par exemple, pour un matériau à base de platine, la mise en forme se fait aux alentours de 300°C pour une viscosité atteignant 10³ Pa.s pour une contrainte de 1MPa, au lieu d'une viscosité de 10¹² Pa.s à la température Tg. L'avantage de cette méthode est qu'il n'y a pas de retrait de solidification ce qui permet d'avoir une pièce reproduisant parfaitement les contours et détails des matrices.

Bien entendu, d'autres types de mise en forme sont possibles comme la mise en forme par coulée ou injection. Ce procédé consiste à mouler l'alliage obtenu par fusion des éléments métalliques dans un four, sous la forme d'une pièce quelconque telle qu'un barreau et cela dans un état cristallin ou amorphe, peu importe. Puis cette pièce de forme quelconque en alliage est de nouveau fondue pour être coulée ou injectée sous pression dans un moule possédant la forme de la pièce définitive. Une fois le moule rempli, celui-ci est refroidi rapidement jusqu'à une température inférieure à T_{g} afin d'éviter la cristallisation de l'alliage et ainsi obtenir une membrane en métal amorphe ou semi-amorphe. Ce procédé est avantageux car, comme le métal amorphe ne possède pas de structure cristalline lorsque celui-ci se solidifie, le métal amorphe ne subit que très peu les effets du retrait de matière dû à la solidification. Ainsi dans le cas d'un matériau cristallin, ce retrait de solidification peut atteindre 5 à 6% ce qui signifie que la capsule 1 voit sa taille diminuer de 5 à 6 % lors de la solidification. Alors que, dans le cas du métal amorphe, ce retrait est d'environ 0.5%. De plus, la coulée ou l'injection est un procédé maîtrisé depuis longtemps, il est par conséquent simple et peu coûteux.

Une fois les deux membranes 2 réalisées, celles-ci sont assemblées l'une à l'autre au niveau de leur surface fermée commune ou bord 4 afin de réaliser la capsule 1. Cette solidarisation des deux membranes 2 peut être effectuée par différentes méthodes comme le soudage ou brasage ou par collage.

Une autre méthode consiste à se servir des propriétés du métal amorphe. Pour cela, les deux membranes 2 sont posées l'une sur l'autre. La périphérie des membranes est alors chauffée à une température comprise entre Tg et Tx. Puis, cette périphérie est pressée entre des mâchoires. Ces mâchoires comprennent des plots agencés comme un peigne de sorte que, lors du pressage avec les mâchoires, les plots des mâchoires entraînent la formation d'interactions mécaniques entre les deux membranes 2 pour les fixer ensemble.

Préférentiellement, cette opération de solidarisation est effectuée de sorte que la capsule 1 soit étanche et que l'espace 3 entre les deux membranes 2 soit totalement isolé de l'extérieur.

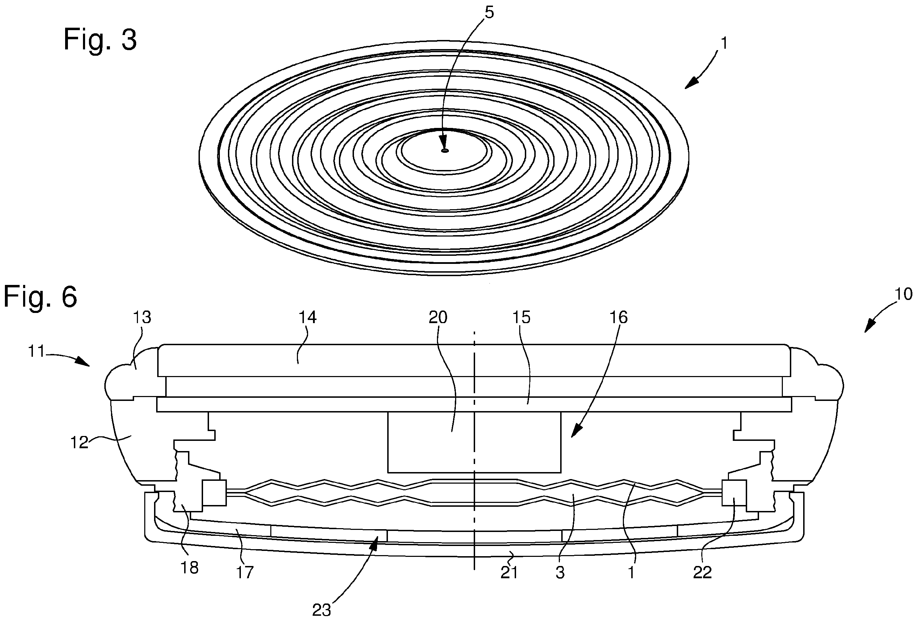

Suite à cette solidarisation, une étape de mise sous vide ou de remplissage est faite. Le vide présent dans la capsule 1 est d'environ 10⁻³ - 10⁻⁷ mbar en sachant que, plus le vide est poussé, meilleures seront les performances. Cette mise sous vide ou ce remplissage sont réalisés généralement via un orifice 5 fait dans une des membranes 2 comme visible à la figure 3. Cet orifice 5 est ensuite bouché par l'application d'un bouchon en métal. L'orifice 5 est préférentiellement situé au centre d'une des membranes 2 car il s'agit d'un endroit qui subit peu de contraintes au contraire d'un orifice placé au niveau de la jointure entre les deux membranes 2, là où la solidarisation est réalisée.

Dans une variante du procédé utilisé, cette facilité de mise en forme du métal amorphe permet avantageusement de réaliser la capsule 1 de façon monobloc comme visible à la figure 5. En effet, avec les procédés de formage à chaud ou de coulée, il devient possible de réaliser des matrices ou un moule formant l'empreinte précise de la capsule 1. Ces procédés sont utilisés pour remplir ces matrices ou ce moule avec du métal amorphe comme expliqué précédemment. Une étape supplémentaire est de dissoudre les matrices ou le moule.

Effectivement, afin de réaliser la capsule 1, il faut prévoir que les matrices ou le moule comprennent un insert créant l'espace entre les membranes qui sera mis sous vide ou rempli de liquide. Le métal amorphe, lors de la réalisation de la capsule 1, se dépose autour dudit insert rendant celui-ci prisonnier du métal amorphe. Le démoulage de la capsule 1 est, par conséquent, réalisé en dissolvant le moule ou les matrices dans un bain chimique, le produit utilisé étant choisi en fonction du matériau composant le moule ou les matrices. La capsule 1 ainsi réalisée ne présente alors qu'un orifice 5 devant être bouché pour assurer l'étanchéité.

L'étape suivante consiste à remplir la capsule 1 de liquide ou à faire le vide dans ladite capsule 1 selon l'application et ensuite à boucher l'orifice 5 afin de garantir l'étanchéité de la capsule 1. Ce remplissage ou mise sous vide est opéré par l'intermédiaire de l'orifice 5 créé lors du formage à chaud ou de la coulée.

Les avantages de cette variante sont multiples. Premièrement, cette variante permet d'avoir une capsule 1 plus simple à produire car il n'existe pas d'opération de solidarisation des deux membranes 2 donc une étape de moins. Cette opération de solidarisation est complexe car elle doit permettre une solidarisation durable et une bonne étanchéité sans cristalliser le métal amorphe. En faisant une capsule 1 monobloc, il n'y a pas de membranes 2 à solidariser et par conséquent, les problèmes d'étanchéité liés à cette solidarisation ne se posent pas. Une capsule 1 monobloc évite donc l'apparition d'un problème complexe à résoudre. L'étanchéité de la capsule 1 est plus simple à réaliser car seul l'orifice 5 permettant le remplissage ou la mise sous vide de la capsule doit être bouché et non l'étanchéité réalisée sur toute la périphérie de la capsule 1.

D'autre part, cette variante permet de mieux exploiter la surface de la capsule 1. Effectivement, lorsque la capsule 1 est fabriquée par solidarisation de deux membranes 2, les membranes 2 doivent être conçues de sorte que la surface fermée commune ou zone de solidarisation 4 ne soit pas préjudiciable aux performances de la capsule 1. Pour cela, les membranes 2 sont conçues pour que leur périphérie soit une zone spécifique à la solidarisation et non une zone active lors du fonctionnement de la capsule 1. Cette zone spécifique à la solidarisation est alors inutile au fonctionnement de la capsule. Or, avec le procédé selon la présente variante, il n'y a plus de solidarisation et donc il n'est plus nécessaire d'avoir une zone inutile prévue pour cette solidarisation. La capsule 1 est donc plus compacte et plus simple à concevoir.

Une alternative à cette variante consiste à utiliser la méthode de moulage par soufflage. Pour cela, une préforme en métal amorphe est réalisée. Cette préforme est réalisée par coulée des éléments constitutifs de l'alliage souhaité fondus sous forme de semi produit, comme par exemple une bille, un tube ou un tube avec un fond, puis refroidis rapidement afin de conserver l'état amorphe.

Cette préforme est ensuite placée dans un moule dont l'empreinte est identique à celle de la capsule que l'on veut réaliser.

La préforme est alors chauffée à une température comprise entre Tg et Tx de sorte que le métal amorphe devienne visqueux et facilement malléable.

Puis, un embout de soufflage est inséré dans la préforme de sorte que l'étape de soufflage puisse commencer. Cette étape de soufflage consiste à injecter de l'air ou un gaz sous pression dans la préforme. Celle-ci, sous l'effet de cette pression et comme le métal la constituant est visqueux, s'étire. Cet étirement du métal amorphe entraîne que ce dernier vient se coller sur les parois de l'empreinte du moule. Le métal amorphe est ensuite refroidi rapidement afin de ne pas cristalliser.

L'étape finale consiste au démoulage de la capsule refroidie en ouvrant le moule en deux.

L'avantage d'une telle alternative est d'avoir un moule moins complexe car il peut être en deux parties s'assemblant. De plus, la complexité est moindre car, par rapport à la variante monobloc qui précède, l'insert qui sert à former l'espace fermé entre les membranes 2 n'est pas présent et par conséquent, un moule classique réutilisable peut être utilisé.

Par ailleurs, les propriétés de mise en forme du métal amorphe permettent de réaliser des membranes 2 ou une capsule 1 selon la géométrie désirée. Par exemple, il est possible de modeler la section des membranes 2 ou de la capsule 1 afin d'en modifier les propriétés au même titre que son épaisseur ou son diamètre. A titre d'exemple, il est possible d'obtenir une membrane 2 ayant une section sinusoïdale 6 comme représentée aux figures 2, 3 et 5. Une telle forme permet l'augmentation de la surface de la membrane mais aussi de sa rigidité. La membrane 2 est donc plus dure à déformer. Cette agencement de la section permet, avantageusement, également de linéariser la déformation élastique du matériau en fonction de la pression. Cette linéarisation est alors une aide pour simplifier les moyens de conversion de la déformation de la membrane 11 en valeur de pression.

Une telle capsule 1 peut être utilisée dans un instrument scientifique tel qu'une montre de plongée 10, représentée à la figure 6, comportant un boîtier 11 comprenant une carrure 12 sur laquelle est fixée une lunette 13 portant la glace 14 de la montre 10. En dessous de la glace 14 est agencé un dispositif d'affichage 15 également fixé à la carrure 12. Dans ce type d'application, l'espace intérieur de la capsule 1 est mis sous vide.

La montre 10 est fermée par un fond 17 fixé de façon étanche sur une pièce intermédiaire 18 elle-même fixée de façon étanche sur la carrure 2, formant ainsi un boîtier. La montre comprend également un capteur de pression 16 situé préférentiellement à l'intérieur de ce boîtier 211.

Le capteur de pression 16 comprend un dispositif de transmission 20 ainsi qu'une capsule 1. La capsule est située à l'intérieur du boîtier 11 de montre 10 et fixée sur un support 22. Cela permet d'assurer une bonne déformation de la capsule. Le support 22 est, dans notre exemple, fixé à la pièce intermédiaire 18. Le support 22 et la pièce intermédiaire 18 sont agencés de sorte que les faces extérieures de ladite capsule 1 soient au contact de la pression extérieure et puissent être déformées par la pression extérieure. Afin que la capsule 1 soit au contact de l'environnement extérieur, il est prévu que le fond 17 du boîtier 21 soit percé de plusieurs orifices ou trous 23. Ces orifices ou trous 23 permettent de déformer les membranes de la capsule 1 si la pression extérieure et la pression à l'intérieure de la capsule 1 sont différentes.

Par ailleurs, il peut être prévu que le fond 17 du boîtier 21 soit muni d'un capot amovible 21 pouvant être fixé par encliquetage afin d'obstruer les orifices ou trous 23 lorsqu'une mesure de pression n'est pas demandée. Cela permet une protection du capteur de pression 16.

Pour le fonctionnement du capteur de pression 16, le dispositif de transmission 10 est utilisé de concert avec ladite capsule. Ainsi sous l'effet de la différence de pression entre l'espace 3 et l'environnement extérieur, la capsule va se déformer plus ou moins. En effet, si la pression extérieure est plus importante que la pression à l'intérieur de la capsule 1, alors la capsule va se déformer de sorte à rétrécir le volume de l'espace 3 de la capsule 1. Au contraire, en altitude, la pression est moins importante que la pression à l'intérieur de la capsule 1, alors la capsule va se déformer de sorte que le volume de l'espace 3 de la capsule 1 augmente.

Cette déformation de la capsule agit sur le dispositif de transmission 20 qui détecte la position de la capsule par rapport à sa position initiale. La position initiale est préférentiellement celle dans laquelle les pressions de part et d'autre de la capsule sont égales. Une fois que la détection est réalisée, le dispositif de transmission 20 transmet cette déformation de la capsule, par exemple, par un mouvement mécanique.

Ce mouvement représentatif de la pression, transmis par le dispositif 20, peut alors être éventuellement amplifié puis utilisé par le dispositif d'affichage 15. Ce dernier utilise un moyen de conversion de ce mouvement représentatif de la déformation, et donc de la pression, en une valeur de profondeur ou d'altitude. Ensuite, ce dispositif 15 va afficher la profondeur mesurée par ledit capteur de pression 16. Bien entendu, il peut être prévu que la détection de la pression soit effectuée par tout autre moyen tel qu'un dispositif transducteur à effet piézo-électrique. De plus, d'autres fonctions qui utilisent la pression telle qu'une fonction altimètre ou météorologique peuvent être envisagées.

Les éléments du capteur 16 sont donc calibrés selon un cahier des charges prédéterminé définissant la plage de mesure souhaitée à la course de la capsule. La plage de mesure souhaitée représente la valeur maximale ou minimale de la pression que l'on veut pouvoir détecter et afficher, par exemple une profondeur de 100 mètres. La course de la capsule, qui consiste en l'addition de la déformation de chaque coupelle 2 par rapport à sa position de repos, définit la déformation maximale que peut prendre ladite capsule. Ainsi, à partir de ces deux valeurs, les caractéristiques de la capsule sont alors définies. Celle-ci se caractérise par ses dimensions (Dans un exemple, la capsule a un diamètre de 40mm et une épaisseur de 3 mm) et par le matériau dont elle est constituée.

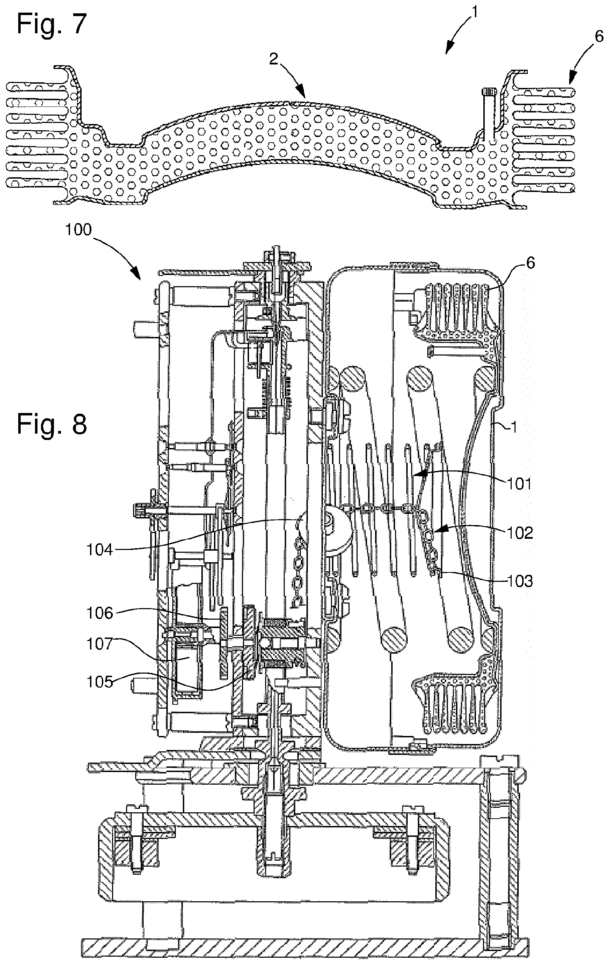

Une autre application de la capsule 1 selon la présente invention est son utilisation comme élément pour remonter un barillet 107 dans une pièce d'horlogerie 100 comme visible aux figures 7 et 8. Pour cela, ces capsules 1 sont remplies de liquide comme par exemple du chlorure d'éthyle. Ce liquide réagit au changement de température pour se vaporiser lorsque la température s'élève et ainsi augmenter la pression dans la capsule. Cette dernière voir son volume augmenter et coopère alors avec un ressort de remontage 101. Ce dernier est retenu par une coupelle 103 reliée à une chaînette 102 par une poulie 104. Lors de variations de température ou de pression, la capsule 1 entraîne le déplacement de la chaînette 102 et donc la rotation de la poulie 104. Cette dernière coopère avec un système d'encliquetage d'un rochet 105 et une roue intermédiaire 106 pour armer le ressort de barillet 107 et le remonter.

L'avantage de la capsule selon la présente invention par rapport à une capsule en matériaux cristallins est qu'une capsule 1 en métal amorphe va avoir une course plus importante. Cela signifie donc un remontage du barillet 107 qui est supérieur puisque la chaînette 102 aura une amplitude de mouvement plus importante. La rotation de la poulie 104 est, par conséquent plus importante et donc le remontage du barillet 107 est plus rapide et plus efficace. Si la course est plus importante pour une capsule 1 en métal amorphe que pour une capsule 1 en métal cristallin, on peut donc obtenir une course équivalente avec une capsule 1 plus compacte et donc une pièce d'horlogerie plus compacte.

De plus, les capsules pour l'application de remontage de barillet comportent avantageusement un soufflet 6. Ce soufflet 6 composé de plusieurs étages est agencé sur la périphérie de la capsule 1 et a pour fonction de contenir le liquide de la capsule 1 lorsque celle-ci se contracte. La contraction de la capsule au niveau de son centre expulse alors le liquide qui va ainsi se loger dans chaque étage du soufflet 6. Ce dernier subit alors une contrainte de la part du liquide et se déforme sous cette contrainte. Avec l'utilisation du métal amorphe, il est possible de diminuer la taille du soufflet 6. Cela est possible car le métal amorphe peut supporter une contrainte plus élevée avant de se déformer plastiquement et donc chaque étage du soufflet 6 peut contenir plus de liquide.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées. Par exemple, la capsule, ou membrane, peut être de forme différente. On comprendra également que la capsule selon la présente invention peut être utilisée dans des engins à déclenchement, à retardement et/ou variation de grandeur physique, tels que systèmes d'allumage pour des applications diverses (démolition, forage, exploitation minière ou similaires).

## Revendications

1. Instrument scientifique (10) comprenant un capteur de pression (16), ledit capteur comprenant une capsule (1) coopérant avec un dispositif de transmission (20) permettant à partir de la déformation de la capsule de fournir une valeur représentative de la pression, **caractérisé en ce que** la capsule comprend deux coupelles (2) rendues solidaires l'une de l'autre de sorte qu'elles sont jointes par une surface fermée commune (4) et définissant ensemble, de part et d'autre de ladite surface, un espace (3) fermé délimité par lesdites coupelles, les deux coupelles étant des membranes (2) flexibles déformables sous l'effet d'une grandeur physique, au moins une desdites membrane étant réalisée en alliage métallique au moins partiellement amorphe afin d'optimiser les dimensions de ladite capsule et **en ce que** ledit instrument (10) comprend un support (22) sur lequel ladite capsule est fixée au niveau de la surface fermée commune (4).

2. Instrument scientifique (10) selon la revendication 1, **caractérisé en ce que** ledit alliage métallique comporte un rapport de la limite élastique sur son module d'Young supérieur à 0,01.

3. Instrument scientifique (10) selon les revendications 1 ou 2, **caractérisé en ce que** l'alliage métallique comporte un module d'Young supérieur à 50GPa.

4. Instrument scientifique (10) selon l'une des revendications précédentes, **caractérisé en ce que** les deux membranes flexibles déformables sont réalisées dans ledit alliage métallique au moins partiellement amorphe.

5. Instrument scientifique (10) selon l'une des revendications précédentes, **caractérisé en ce que** ledit alliage métallique est totalement amorphe.

6. Instrument scientifique (10) selon l'une des revendications précédentes, **caractérisé en ce que** ledit alliage métallique comprend au moins un élément métallique qui est du type précieux et choisi parmi les éléments de la liste comprenant l'or, le platine, le palladium, le rhénium, le ruthénium, le rhodium, l'argent, l'iridium ou l'osmium.

7. Instrument scientifique (10) selon l'une des revendications précédentes, **caractérisé en ce que** ledit matériau est exempt d'élément allergène.

8. Instrument scientifique (10) selon l'une des revendications précédentes, **caractérisé en ce que** chaque membrane (2) est sensiblement discoïdale.

9. Instrument scientifique (10) selon l'une des revendications précédentes, **caractérisé en ce que** chaque membrane (2) possède une section non rectiligne afin d'augmenter sa surface de déformation.

10. Instrument scientifique (10) selon la revendication 9 **caractérisé en ce que** la section de la membrane comporte au moins une partie sinusoïdale.

11. Instrument scientifique selon la revendication 1, **caractérisé en ce qu'**il comprend en outre un moyen de conversion de ladite valeur représentative de la pression en une valeur de profondeur permettant à ladite montre d'effectuer une fonction profondimètre.

12. Instrument scientifique selon la revendication 1, **caractérisé en ce qu'**il comprend en outre un moyen de conversion de ladite valeur représentative de la pression en une valeur d'altitude permettant à ladite montre d'effectuer une fonction altimètre.

13. Instrument scientifique selon l'une des revendications 1 à 12, **caractérisé en ce que** l'espace (3) entre les deux coupelles (2) est mis sous un vide compris entre 10⁻³ et 10⁻⁷ mbar.

14. Instrument scientifique selon l'une des revendications 1 à 13, **caractérisé en ce que** ledit instrument (10) est une pièce d'horlogerie portable.

## Patentansprüche

1. Wissenschaftliches Instrument (10) mit einem Drucksensor (16), wobei der Sensor eine Kapsel (1) umfasst, die mit einer Übertragungsvorrichtung (20) zusammenwirkt, die aus der Verformung der Kapsel einen den Druck repräsentierenden Wert liefern kann, **dadurch gekennzeichnet, dass** die Kapsel zwei miteinander verbundene Teller (2) aufweist, derart, dass sie durch eine gemeinsame verschließende Fläche (4) verbunden sind und zusammen auf beiden Seiten der Fläche einen geschlossenen Raum (3) definieren, der durch die Teller begrenzt ist, wobei die beiden Teller flexible Membranen (2) sind, die unter der Wirkung einer physikalischen Größe verformbar sind, wobei mindestens eine der Membranen aus einer mindestens teilweise amorphen Metalllegierung hergestellt ist, um die Abmessungen der Kapsel zu optimieren, und dass das Instrument (10) einen Halter (22) umfasst, an dem die Kapsel an der gemeinsamen verschließenden Fläche (4) befestigt ist.

2. Wissenschaftliches Instrument (10) nach Anspruch 1, **dadurch gekennzeichnet, dass** die Metalllegierung ein Verhältnis der Elastizitätsgrenze zu ihrem Young'schen Elastizitätsmodul größer als 0,01 aufweist.

3. Wissenschaftliches Instrument (10) nach Anspruch 1 oder 2, **dadurch gekennzeichnet, dass** die Metalllegierung einen Young'schen-Elastizitätsmodul größer als 50 GPa aufweist.

4. Wissenschaftliches Instrument (10) nach einem der vorhergehenden Ansprüche, **dadurch gekennzeichnet, dass** die beiden verformbaren flexiblen Membranen aus der mindestens teilweise amorphen Metalllegierung hergestellt sind.

5. Wissenschaftliches Instrument (10) nach einem der vorhergehenden Ansprüche, **dadurch gekennzeichnet, dass** die Metalllegierung vollständig amorph ist.

6. Wissenschaftliches Instrument (10) nach einem der vorhergehenden Ansprüche, **dadurch gekennzeichnet, dass** die Metalllegierung mindestens ein metallisches Element enthält, das vom Edelmetall-Typ ist und aus den Elementen der Liste ausgewählt ist, die Gold, Platin, Palladium, Rhenium, Ruthenium, Rhodium, Silber, Iridium oder Osmium enthält.

7. Wissenschaftliches Instrument (10) nach einem der vorhergehenden Ansprüche, **dadurch gekennzeichnet, dass** das Material frei von allergenen Elementen ist.

8. Wissenschaftliches Instrument (10) nach einem der vorhergehenden Ansprüche, **dadurch gekennzeichnet, dass** jede Memban (2) im Wesentlichen scheibenförmig ist.

9. Wissenschaftliches Instrument (10) nach einem der vorhergehenden Ansprüche, **dadurch gekennzeichnet, dass** jede Membran (2) einen nicht geradlinigen Querschnitt aufweist, um ihre Verformungsfläche zu vergrößern.

10. Wissenschaftliches Instrument (10) nach Anspruch 9, **dadurch gekennzeichnet, dass** der Querschnitt der Membran mindestens einen sinusförmigen Teil aufweist.

11. Wissenschaftliches Instrument nach Anspruch 1, **dadurch gekennzeichnet, dass** es ferner ein Mittel zum Umwandeln des den Druck repräsentierenden Werts in einen Tiefenwert umfasst, der es der Uhr ermöglicht, eine Tiefenmessfunktion auszuführen.

12. Wissenschaftliches Instrument nach Anspruch 1, **dadurch gekennzeichnet, dass** es ferner ein Mittel zum Umwandeln des den Druck repräsentierenden Werts in einen Höhenwert umfasst, der es der Uhr ermöglicht, eine Höhenmessfunktion auszuführen.

13. Wissenschaftliches Instrument nach einem der Ansprüche 1 bis 12, **dadurch gekennzeichnet, dass** in dem Raum (3) zwischen den beiden Teller (2) ein Unterdruck von 10⁻³ bis 10⁻⁷ mbar herrscht.

14. Wissenschaftliches Instrument nach einem der Ansprüche 1 bis 13, **dadurch gekennzeichnet, dass** das Instrument (10) eine tragbare Uhr ist.

## Claims

1. Scientific instrument (10) comprising a pressure sensor (16), said sensor including a capsule (1) cooperating with a transmission device (20) for providing, from the deformation of the capsule, a value representative of pressure, **characterized in that** the capsule comprises two shells (2) secured to each other so as to be joined by a common closed surface (4) and together defining, on both sides of said surface, a closed space (3) delimited by said shells, the two shells being flexible membranes (2) able to deform under the effect of a physical magnitude, **characterized in that** at least one of said membranes is made of an at least partially amorphous metal alloy in order to optimise the dimensions of said capsule and **in that** said instrument (10) comprises a support (22) onto which said capsule is fixed at the common closed surface (4).

2. Scientific instrument (10) according to claim 1, **characterized in that** said metal alloy has a limit of elasticity to Young's modulus ratio of more than 0.01.

3. Scientific instrument (10) according to claims 1 or 2, **characterized in that** the metal alloy has a Young's modulus of more than 50 GPa.

4. Scientific instrument (10) according to any of the preceding claims, **characterized in that** the two flexible deformable membranes are made of said at least partially amorphous metal alloy.

5. Scientific instrument (10) according to any of the preceding claims, **characterized in that** said metal alloy is completely amorphous.

6. Scientific instrument (10) according to any of the preceding claims, **characterized in that** said metal alloy includes at least one precious metal element and is selected from the list including gold, platinum, palladium, rhenium, ruthenium, rhodium, silver, iridium or osmium.

7. Scientific instrument (10) according to any of the preceding claims, **characterized in that** said material is free of any allergens.

8. Scientific instrument (10) according to any of the preceding claims, **characterized in that** each membrane (2) is substantially discoid.

9. Scientific instrument (10) according to any of the preceding claims, **characterized in that** each membrane (2) has a non-rectilinear section in order to increase the deformation surface thereof.

10. Scientific instrument (10) according to claim 9, **characterized in that** the section of the membrane includes at least one sinusoidal part.

11. Scientific instrument according to claim 1, **characterized in that** it further includes a means of converting said value representative of pressure into a depth value allowing said watch to perform a depth meter function.

12. Scientific instrument according to claim 1, **characterized in that** it further includes a means of converting said value representative of pressure into an altitude value allowing said watch to perform an altimeter function.

13. Scientific instrument according to any of claims 1 to 12, **characterized in that** the space (3) between the two shells (2) is placed under vacuum between 10⁻³ and 10⁻⁷ mbar.

14. Scientific instrument according to any of claims 1 to 13, **characterized in that** said instrument (10) is a portable timepiece.
